# EUROPEAN PATENT APPLICATION

(11) **EP 4 653 959 A1**
(43) Date of publication of application: **26.11.2025**
(21) Application number: 24177056.9
(22) Date of filing: 21.05.2024
(51) Int. Cl.: G05B 17/02

(54) **FEDERATED LEARNING MODEL INTEGRATION FOR DIGITAL TWIN SIMULATION OF SEABOURNE VESSELS**

(71) Applicant: Danaos Shipping Company Limited, 3011 Limassol (CY)
(72) Inventor: KAKLIS, Dimitrios, 185 45 Piraeus (GR)
(74) Representative: Bringer IP

(57) **Abstract**

Federated learning model integration for digital twin simulation in a digital twin simulator includes receiving different model updates from different contributor decarbonization models corresponding to different instrumented vessels and integrating the different model updates into a new version of the unified decarbonization model. The digital twin simulator then simulates the new version of the unified decarbonization model by receiving directives through an interface that change different simulation parameters from directing computer terminals acting upon the new version of the unified decarbonization model. As such, decarbonization performance of a hypothetical vessel can be computed responsive to the change to the particular simulation parameter.

## Description

### BACKGROUND OF THE INVENTION

### Field of the Invention

The present invention relates to the technical field of emissions modeling for vessels and more particularly to integrating and tuning performance control parameters of a vessel to meet decarbonization goals reflected in a decarbonization model.

### Description of the Related Art

Information and communications technology (ICT) refers to a communication device or application, such as a cellular communications device, radio communications device, satellite communications device or computer data communications device. ICT coupled with an array of sensors and operable to support digitalized modeling in the form of digital twin technology has proven especially promising in the understanding and optimization of vehicles, from satellites, to automobiles and recently, ocean-going vessels. In simple terms, the digital twin of a vessel is a digital replica of the vessel in terms of its structure, equipment and functions. To that end, digital twins use bi-directional, communication links with the ICT systems onboard the vessel to monitor, and predict ship performance and also optimize ship operational performance by activating appropriate actions on the physical object either manually or automatically.

Digital twinning then, is the process, data and platforms used to create a digital twin. A main principle is that there can be one and only one digital twin for every single vessel--no more, no less. The digital twin evolves with its physical counterpart and the two must mirror one another at all times. The communication link from the ship to the digital twin is used to constantly monitor the physical vessel through several data collection techniques and devices--namely Internet-of-Things (IoT) devices. The constant data collection from the loT devices on board the vessel allows the digital twin to continuously learn from its physical counterpart, and to evolve throughout the lifecycle of the vessel. As a result, a digital twin can be used to gain insights into the current state of the vessel as well as to predict future states of the vessel through simulation or predictive algorithms. Finally, the digital twin can provide automated supervisory control of the physical ship or inform human decision makers who can perform appropriate tasks.

Examples of digital twin simulations systems include that described in European patent application publication WO2024076448 entitled GENERATION OF A DIGITAL TWIN FROM CONSTRUCTION INFORMATION. Other examples of digital twin simulations systems include that which is described in European patent application publication WO2024064890 entitled USING THE CONCEPTS OF METABOLIC FLUX RATE CALCULATIONS AND LIMITED DATA TO DIRECT CELL CULTURE. MEDIA OPTIMIZATION AND ENABLE THE CREATION OF DIGITAL TWIN SOFTWARE PLATFORMS. Even further examples of digital twin simulation systems include that which is described in European patent application publication EP23869229 entitled DIGITAL TWIN FOR A FUEL SYSTEM.

Notably, it has been proposed to incorporate digitalization in order to better understand emissions generation and opportunities for decarbonization in connection with ocean going vessels. Indeed, it is now a key industry requirement to deploy advanced decision support systems in order to support vessel operators in quantifying the effect of the different decarbonization pathways on the vessel emission profile, as well as the technical and economic performance of the vessel. To that end, optimizing decarbonization pathways can be linked to the measurement of how efficiently a ship transports goods or passengers which measurement is given in terms of the quantity of carbon dioxide emitted by a vessel per cargo-carrying capacity and nautical mile. Each observed vessel is then given an annual rating, whereby the rating thresholds will become increasingly stringent in the future.

Digital twinning for a singular vessel according to the observed metrics produced by onboard IoT devices is thus limited to the observations and hence experiences of an individual vessel. But in doing so, it is inherent that unobserved observations by the IoT devices do not influence the model used in digital twinning to simulate the vessel. Yet, so much is to be learned from the collective experiences of different vessels when modeling any single one of the vessels. Vessel operators, though, are reluctant to share IoT sensed data honoring the proprietary nature of the data in connection with the operator of the vessel.

### BRIEF SUMMARY OF THE INVENTION

Embodiments of the present invention address technical deficiencies of the art in respect to model integration of different decarbonization models for different vessels into a unified model for use in digital twin simulation. To that end, embodiments of the present invention provide for a novel and non-obvious method for federated learning model integration for digital twin simulation in a digital twin simulator. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a method for federated learning model integration for digital twin simulation in a digital twin simulator includes receiving different model updates from different contributor decarbonization models corresponding to individual adjustments to components of different instrumented vessels and integrating the different model updates and vessel performance responsive to corresponding ones of the individual adjustments into a new version of the unified decarbonization model so as to reflect federated learning of the individual adjustments to the components of the different instrumented vessels and the vessel performance responsive to the corresponding ones of the individual adjustments. The method additionally includes executing a digital twin simulator simulating a unified decarbonization model.

The simulation includes receiving directives through an interface that change different simulation parameters from directing computer terminals acting upon the new version of the unified decarbonization model. Those parameters include, for instance, an internal vessel component performance metric or an external environment metric. The method yet further includes receiving a particular directive in the interface to the digital twin simulator directing a change to a particular simulation parameter during simulation of the new version of the unified decarbonization model. For instance, the directive may be received from a corresponding one of the terminals associated with one of the different instrumented vessels. Finally, the method includes computing decarbonization performance of a hypothetical vessel responsive to the change to the particular simulation parameter.

In one aspect of the embodiment, the method includes an additional step of selecting one of the different instrumented vessels for removal from the federated learning model. Then, a previous version of the unified decarbonization model can be selected which previous version pre-dates the receipt of model updates from a contributor decarbonization models corresponding to the selected vessel. Thereafter, the new version of the unified decarbonization model can be rolled back to the identified previous version so as to remove the model update contributions of the removed vessel to the unified decarbonization model. Then, the contributions of the remaining vessels can be reapplied to the previous version of the unified decarbonization model so as to produce a new version of the decarbonization model that is devoid of the contributions of the removed vessel.

To that end, optionally, each of the model updates can be logged in connection with associated ones of the different instrumented vessels. Using the log, the model updates which had been received from the time of the rolled back unified decarbonization model up until the new version of the unified decarbonization model can be identified which correspond to only those of the different instrumented vessels other than the selected vessel. Consequently, the identified model updates are applied to the rolled back unified decarbonization model in order to produce an updated version of the rolled back unified decarbonization model.

In another embodiment of the invention, a data processing system is provided. The system includes a host computing platform with one or more computers, each with memory and one or processing units including one or more processing cores. The system also includes a unified decarbonization model stored in the memory. Even further, the system includes a digital twin simulator executing in the host computing platform and simulating the unified decarbonization model by receiving directives through an interface to the digital twin simulator, the directives changing different simulation parameters from directing computer terminals. Finally, the system includes a federated learning model integration module.

The module includes computer program instructions enabled while executing in the memory of at least one of the processing units of the host computing platform to perform a process of federated learning model integration. The process includes receiving different model updates from different contributor decarbonization models corresponding to different instrumented vessels and integrating the different model updates into a new version of the unified decarbonization model. The process additionally includes executing the digital twin simulator acting upon the new version of the unified decarbonization model. Finally, the process includes receiving a directive in the interface to the digital twin simulator directing a change to a particular simulation parameter during simulation of the new version of the unified decarbonization model and computing decarbonization performance of a hypothetical vessel responsive to the change to the particular simulation parameter.

In even yet another embodiment of the invention, a computing device is provided that includes a non-transitory computer readable storage medium having program instructions stored therein. The instructions are executable by at least one processing core of a processing unit to cause the processing unit to perform federated learning model integration for digital twin simulation in a digital twin simulator which simulates a unified decarbonization model. The simulator simulates the unified decarbonization model by receiving directives through an interface, the directives changing different simulation parameters from directing computer terminals.

Of note, the program instructions perform federated learning model integration for digital twin simulation. The program instructions do so by receiving different model updates from different contributor decarbonization models corresponding to different instrumented vessels. The program instructions then integrate the different model updates into a new version of the unified decarbonization model. The program instructions yet further execute the digital twin simulator acting upon the new version of the unified decarbonization model. As such, the program instructions receive a directive in the interface to the digital twin simulator directing a change to a particular simulation parameter during simulation of the new version of the unified decarbonization model.; Finally, the program instructions compute decarbonization performance of a hypothetical vessel responsive to the change to the particular simulation parameter.

In this way, the technical deficiencies of the digital twin simulation of a collection of vessels are overcome owing to federation of model updates from the individual vessels in the collection and the subsequent updating of a unified model within the digital twin simulator, thus protecting the confidentiality of the nature and content of the individual decarbonization models of the respective vessels in the collection.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of federated learning model integration for digital twin simulation;
Figure 2 is a block diagram depicting a data processing system adapted to perform one of the aspects of the process of Figure 1; and,
Figure 3 is a flow chart illustrating one of the aspects of the process of Figure 1.

### DETAILED DESCRIPTION OF THE INVENTION

Embodiments of the invention provide for federated learning model integration for digital twin simulation. In accordance with an embodiment of the invention, different vessels provide different updates to different corresponding decarbonization models for corresponding ones of the vessels. The updates marshal within a database and are applied to a unified decarbonization model reflective of all of the vessels contributing model updates to the unified decarbonization model. Thereafter, a digital twin simulator loads the unified decarbonization model for use in simulating hypothetical parameter changes to parameters affecting elements of the unified decarbonization model and the digital twin simulator presents a prospective decarbonization performance resulting from the changes to the parameters. In this way, the knowledge gathered by each of the vessels in maintaining respective decarbonization models can be leveraged within a unified model for all of the vessels while maintaining the privacy of the elements of the individual decarbonization models on behalf of respective ones of the vessels.

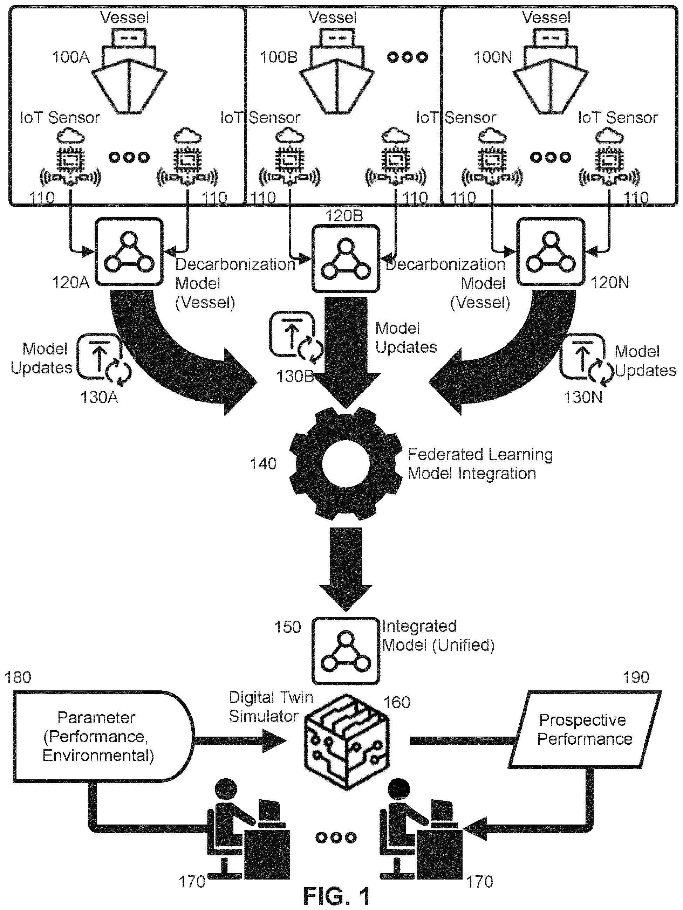

In illustration of one aspect of the embodiment, Figure 1 pictorially shows a process of federated learning model integration for digital twin simulation. As shown in Figure 1, different vessels 100A, 100B, 100N in a collection of vessels are individually instrumented with different Internet of Things (IoT) sensors 110 sensing both environmental conditions in connection with a corresponding one of the vessels 100A, 100B, 100N, and also operational performance of different components of the corresponding one of the vessels 100A, 100B, 100N. The sensed values of the sensors 110 update the respective decarbonization models 120A, 120B, 120N for the corresponding one of the vessels 100A, 100B, 100N with associated model updates 130A, 130B, 130N.

As the model updates 130A, 130B, 130N are applied to respective ones of the decarbonization models 120A, 120B, 120N, those model updates 130A, 130B, 130N are presented to federated learning model integration logic 140 which presents the model updates 130A, 130B, 130N for integration into a unified model 150. The unified model 150 then loads into a digital twin simulator 160 which is accessed by different end users 170. The different end users 170 present through an interface to the digital twin simulator 160 a prospective change in a parameter 180, such as an environmental parameter experience by a simulated vessel, or a performance parameter of an element of the simulated vessel. The digital twin simulator 160 responds to the prospective change in the parameter 180 with a simulated performance 190 for the simulated vessel.

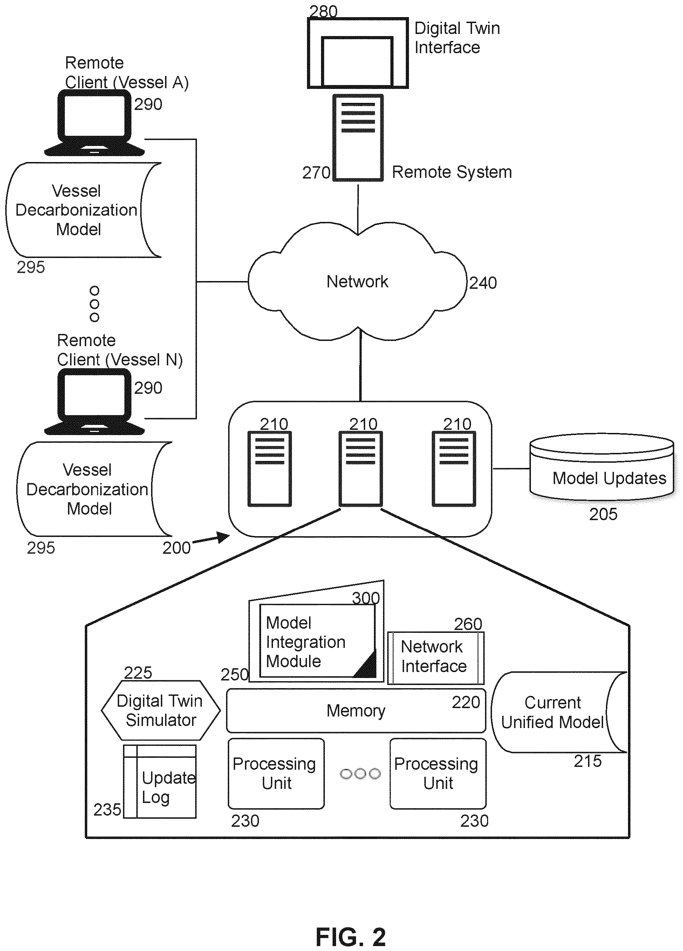

Aspects of the process described in connection with Figure 1 can be implemented within a data processing system. In further illustration, Figure 2 schematically shows a data processing system adapted to perform federated learning model integration for digital twin simulation. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, or the computers can be remotely disposed from one another and in communication with one another through network interface 260 over a data communications network 240.

The host computing platform 200 additionally is communicatively coupled over data communications network 240 to different remote computing clients 290 for respectively different instrumented vessels, each with a separate vessel decarbonization model 295. In this regard, each model 295 is a data structure storing different records each referring to a component or characterization of an associated one of the instrumented vessels and a corresponding value for the component or characterization. Each of the different remote computing clients 290 provides model updates to respective ones of the vessel decarbonization models 295 to a data store of model updates 205 from over the data communications network, the model updates 205 including, for example, a change in value to one of the records of an associated one of the models 295. The model updates of the data store of model updates 205 in turn support the updating of a current unified decarbonization model 215 disposed within the memory 220 of the host computing platform and aggregating the records of the different models 295 for the associated ones of the different instrumented vessels.

A digital twin simulator 225 executes in the host computing platform 200. The digital twin simulator 225 is communicatively linked over a bi-directional, communication link with an ICT system onboard one of the instrumented vessels to be simulated so as to monitor, and predict vessel performance and also to optimize operational performance of the one of the instrumented vessels to be simulated by activating appropriate actions on a physical object of the one of the instrumented vessels to be simulated. To that end, the digital twin simulator 225 utilizes the current unified model 215 in order to simulate parameter changes in the one of the instrumented vessels to be simulated reflecting an amalgamation of the vessel decarbonization models 295.

Notably, a computing device 250 including a non-transitory computer readable storage medium can be included with the data processing system 200 and accessed by the processing units 230 of one or more of the computers 210. The computing device stores 250 thereon or retains therein a program module 300 that includes computer program instructions which when executed by one or more of the processing units 230, performs a programmatically executable process for federated learning model integration for digital twin simulation. Specifically, the program instructions during execution receive updates in the data store of model updates 205 and update the current unified model 215. The program instructions further log each updating of the current unified model 215 in an update log in connection with an identity of each of the vessels contributing model updates to the unified model 215.

Notably, upon determination that one of the vessels has withdrawn from contributing updates to the data store of model updates 205, the program instructions inspect the update log 235 in order to identify a most recent version of the current unified model lacking updates from the withdrawing vessel. Thereafter, the program instructions render the identified most recent version of the current unified model as the current model for use by the digital twin simulator. As well, the program instructions collect all model updates in the data store of model updates 205 in connection with all of the vessels other than the withdrawing vessel since the identified most recent version of the current unified model, and the program instructions update the identified most recent version of the current unified model with those collected model updates to produce a current unified model lacking in contribution from the withdrawing vessel.

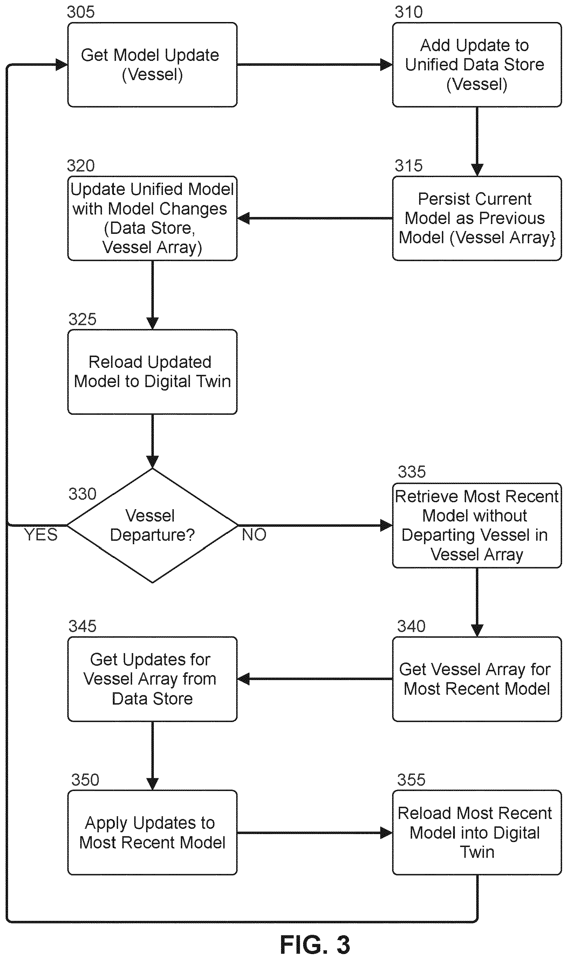

In further illustration of an exemplary operation of the module, Figure 3 is a flow chart illustrating one of the aspects of the process of Figure 1. Beginning in block 305, a model update is received in connection with a decarbonization model for a specific vessel and in block 310, the model update is added to a data store of model updates for a unified decarbonization model. Then, in block 315, the current unified decarbonization model used by a digital twin simulator is persisted as a previous model in connection with an array of vessel identifiers for different vessels contributing model updates reflected in the current unified decarbonization model. Thereafter, in block 320 the unified decarbonization model updates with the changes included in the data store of mode updates and in block 325, the digital twin simulator loads the current unified decarbonization model as a basis for simulating prospective parameter changes for a simulated vessel to produce a performance value responsive to the prospective parameter changes.

In decision block 330, it is determined whether or not one of the vessels identified in the array has elected to depart from the federated learning model integration process. If so, in block 335, a set of previous unified models are queried with an identity of the departing vessel in order to locate a most recent one of the models including update contributions not stemming from a decarbonization model for the departing vessel. An array of update contributing vessels is then determined for the identified previous model in block 340. In block 345, the updates in the data store of model updates associated with those of the contributing vessels of the determined array are then retrieved from the data store of model updates and block 350, the retrieved updates are applied to the located most recent one of the models. Finally, in block 355 the most recent one of the models, as updated, is loaded into memory by the digital twin simulator.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A method for federated learning model integration for digital twin simulation in a digital twin simulator simulating a unified decarbonization model by receiving directives through an interface, the directives changing different simulation parameters from directing computer terminals, the method **characterized in that** the method includes:
receiving different model updates from different contributor decarbonization models corresponding to individual adjustments to components of different instrumented vessels and vessel performance responsive to corresponding ones of the individual adjustments;
integrating the different model updates into a new version of the unified decarbonization model so as to reflect federated learning of the individual adjustments to the components of the different instrumented vessels and the vessel performance responsive to the corresponding ones of the individual adjustments;
communicatively linking a digital twin simulator executing in a computer over a bi-directional, communication link with an information and communications technology (ICT) system onboard one of the instrumented vessels so as to monitor, and predict vessel performance and also to optimize operational performance of the one of the instrumented vessels by activating appropriate actions on a physical object of the one of the instrumented vessels;
executing the digital twin simulator acting upon the new version of the unified decarbonization model;
receiving a directive in the interface to the digital twin simulator directing a change to a particular simulation parameter during simulation of the new version of the unified decarbonization model; and,
computing decarbonization performance of a hypothetical state of the one of the instrumented vessels responsive to the change to the particular simulation parameter.

2. The method of claim 1, further comprising:
selecting one of the different instrumented vessels for removal from the federated learning model;
identifying a previous version of the unified decarbonization model pre-dating a receipt of model updates from one of the different contributor decarbonization models corresponding to the selected one of the different instrumented vessels; and,
rolling back the new version of the unified decarbonization model to the identified previous version.

3. The method of claim 2, further comprising:
logging each of the model updates in connection with associated ones of the different instrumented vessels;
identifying ones of the model updates, received from the rolled back unified decarbonization model up to the new version of the unified decarbonization model, and corresponding to the associated ones of the different instrumented vessels other than the selected one of the different instrumented vessels; and,
applying the identified ones of the model updates to the rolled back unified decarbonization model to produce an updated version of the rolled back unified decarbonization model.

4. The method of claim 1, further comprising receiving the directive from a corresponding one of the terminals associated with one of the different instrumented vessels.

5. The method of claim 1, wherein the particular simulation parameter is one of an internal vessel component performance metric and an external environment metric.

6. A data processing system comprising:
a host computing platform comprising one or more computers, each with memory and one or processing units including one or more processing cores;
a unified decarbonization model stored in the memory; and,
a digital twin simulator executing in the host computing platform and simulating the unified decarbonization model by receiving directives through an interface to the digital twin simulator, the directives changing different simulation parameters from directing computer terminals,
**characterized in that** the system additionally includes a federated learning model integration module comprising computer program instructions enabled while executing in the memory of at least one of the processing units of the host computing platform to perform:
receiving different model updates from different contributor decarbonization models corresponding to different instrumented vessels;
integrating the different model updates into a new version of the unified decarbonization model;
communicatively linking the digital twin simulator over a bi-directional, communication link with an information and communications technology (ICT) system onboard one of the instrumented vessels so as to monitor, and predict vessel performance and also to optimize operational performance of the one of the instrumented vessels by activating appropriate actions on a physical object of the one of the instrumented vessels;
executing the digital twin simulator acting upon the new version of the unified decarbonization model;
receiving a directive in the interface to the digital twin simulator directing a change to a particular simulation parameter during simulation of the new version of the unified decarbonization model; and,
computing decarbonization performance of a hypothetical state of the one of the instrumented vessels responsive to the change to the particular simulation parameter.

7. A computing device comprising a non-transitory computer readable storage medium having program instructions stored therein, the instructions being executable by at least one processing core of a processing unit to cause the processing unit to perform federated learning model integration for digital twin simulation in a digital twin simulator simulating a unified decarbonization model by receiving directives through an interface, the directives changing different simulation parameters from directing computer terminals, the device **characterized in that** the program instructions perform the federated learning model integration for digital twin simulation by:
receiving different model updates from different contributor decarbonization models corresponding to different instrumented vessels;
integrating the different model updates into a new version of the unified decarbonization model;
communicatively linking a digital twin simulator executing in a computer over a bi-directional, communication link with an information and communications technology (ICT) system onboard one of the instrumented vessels so as to monitor, and predict vessel performance and also to optimize operational performance of the one of the instrumented vessels by activating appropriate actions on a physical object of the one of the instrumented vessels;
executing the digital twin simulator acting upon the new version of the unified decarbonization model;
receiving a directive in the interface to the digital twin simulator directing a change to a particular simulation parameter during simulation of the new version of the unified decarbonization model; and,
computing decarbonization performance of a hypothetical state of the one of the instrumented vessels responsive to the change to the particular simulation parameter.
